# EUROPEAN PATENT APPLICATION

(11) **EP 4 663 962 A1**
(43) Date of publication of application: **17.12.2025**
(21) Application number: 24181297.3
(22) Date of filing: 11.06.2024
(51) Int. Cl.: F16B 5/04, F16B 19/08

(54) **SELF-PIERCING RIVET**

(71) Applicant: Newfrey LLC, New Britain, CT 06053 (US)
(72) Inventor: STOCK, Maximilian, 35394 Gießen (DK); BARTIG, Paul, 35394 Gießen (DE); WISSLING, Matthias, 35394 Gießen (DE)
(74) Representative: SBD IPAdmin

(57) **Abstract**

Self-piercing rivet (10) for producing a joining connection between at least two components comprising a rivet head (12), a rivet free end (16) and a rivet shank (14) extending between the rivet head (12) and the rivet free end (16) along a longitudinal axis (X), the rivet shank (14) having a central shank bore (18) comprising a base (20), the rivet shank (14) comprises a cylindrical shank outer surface (22) and a cylindrical shank inner surface (24) limiting the central shank bore, the rivet free end comprises an outer portion (26), the outer portion (26) connecting the shank inner surface (20) by means of a profile (28) which comprises a cutting radius (R1), the outer portion forming, with the profile having the cutting radius R1, a piercing tip (30) facing away from the rivet head, the shank outer surface (20) has a first diameter (Ds), the central shank bore (18) comprises a bore depth (T) between the base (20) of the central shank bore (18) and the piercing tip (30). The rivet shank (14) has a substantial constant radial thickness (ts) and in cross-section a rivet shank surface which is at least 15 mm², and wherein a deflection angle (B) of the profile (28) is at least of 40 degrees.

## Description

The present disclosure relates to a self-piercing rivet, particularly a semi-hollow self-piercing rivet, to produce a joining connection between at least two components.

A self-piercing rivet is partially hollow with a head and a cylindrical shank that terminates in a cutting edge. As the rivet is driven into at least two overlapping sheets of material over a suitably shaped die, the shank is caused to flare outwardly. The sheets of material are caused to deform around the shank, creating an annulus that encapsulates the shank. The shank and edge of the rivet remain embedded in the sheet material after the rivet has been set. Self-piercing riveting enables sheet material to be joined without the requirement for the pre-drilling or pre-punching of a hole in the material.

The punch riveting as a joining method is widely used in the industry. Especially in the manufacturing of automobiles where light-weight materials, such as aluminium or high-strength steel, magnesium sheets, plastic, carbon fiber reinforced plastic and similar materials, have been adopted for vehicle body panels in the interests of weight reduction and therefore reduced energy consumption. Aluminium is notably difficult or impossible to spot weld, particularly to steel, owing to its high thermal conductivity, low melting range and propensity to form oxide surface films.

Numerous documents describe a self-piercing rivet particularly suitable for aluminium materials.

For instance, the rivet disclosed in document EP3626982A1 from the applicant allows the joining of several layers of aluminum workpieces notably with a large overall thickness.

Such rivet is satisfactory, however, there is still a need to improve the existing self-piercing rivet, notably for allowing a connection for soft or brittle or high strength aluminium materials providing a large contact surface so that the self-piercing rivet can be significantly spread at the end.

The above-mentioned object is achieved by the self-piercing rivet defined in independent patent claim 1.

The self-piercing rivet for producing a joining connection comprises a rivet head, a rivet free end and a rivet shank extending between the rivet head and the rivet free end along a longitudinal axis. The rivet shank has a central shank bore with a base. The rivet shank comprises a cylindrical shank outer surface and a cylindrical shank inner surface limiting the central shank bore. The rivet free end comprises an outer portion which is radiused with a radius of curvature, the outer portion connecting the shank inner surface by means of a profile which comprises a cutting radius, the outer portion forming with the profile having the cutting radius a piercing tip facing away from the rivet head. The shank outer surface has a first diameter, the central shank bore comprises a bore depth between the base of the central shank bore and the piercing tip. The rivet shank has a substantial constant radial thickness, in cross-section a rivet shank surface which is at least 15 mm² and a deflection angle of the profile of at least 40 degrees.

The term "substantial constant radial thickness" implies that the central bore of a rivet may have a slightly reduced diameter at the end of the central shank bore. This adjustment is typically made for manufacturing reasons, specifically to improve the demolding process of the rivet. For instance, the diameter of the central shank bore may be 0,05 mm smaller in the vicinity of the base, than the diameter of the central shank bore in the vicinity of the transition towards the piercing tip. The ring foot area of 15mm² allows reduced setting forces. The large outer cutting edge, characterized by the deflection angle of the profile of at least 40 degrees, provides stability to the rivet to prevent premature spreading (otherwise there is a risk of collapsing). The deflection angle (also called angle of intersection and central angle) is the angle formed between the initial direction of the profile and the direction it deviates or deflects from its original course. In other words, it corresponds to the angle formed at the center of a circle by two radii that extend to the endpoints of the profile. It represents the amount of rotation needed to sweep from one endpoint of the arc to the other along the circumference of the circle. The endpoints are in the present case the piercing tip and the point at the interface between the profile and the shank inner surface.

According to an embodiment, a rivet length from the piercing tip up to the top surface along the longitudinal axis is between 5 and 9 mm. The long inner cutting edge/contour enables pronounced spreading behavior with short rivet lengths.

According to an embodiment, the cutting radius is of about 3 millimeters. Such cutting radius provides an extended 'contact area' so that with the die design, the rivet can be significantly expanded at the end of the setting process.

According to an embodiment, the outer portion comprises an outer portion width and an outer portion distance, and wherein the outer portion width is at least 0.25 mm.

According to an embodiment, the profile comprises an inner width which is at least three times larger than the outer portion width.

According to an embodiment, the profile which comprises the cutting radius comprises an inner width which is at least 70% of the radial thickness.

According to an embodiment, the outer portion is curved or beveled.

According to an embodiment, the length of the rivet free end along the longitudinal axis from the piercing tip to the cylindrical shank inner surface is between 25% and 55% of the length of the central shank bore between the piercing tip and the base along the longitudinal axis.

According to an embodiment, the base is flat or arc shaped. The geometry of the base provides stability and support to the rivet and helps distribute the load evenly across the surface, reducing stress concentration and preventing localized failure. According to an embodiment, the cylindrical shank outer surface merges by means of an underhead radius and a head cone into the external circumference of the head. This geometry helps reduces stress concentration when setting the rivet. However, other head geometries are also possible. For instance, the cylindrical shank outer surface can merge by means of an underhead radius into the external circumference of the head.

According to an embodiment, the rivet head comprises a head thickness extending from the head top surface to the base, and wherein the head thickness is of about 1 mm. Rivets with small head thickness can be set flush or nearly flush with the surface of the materials being joined. Besides, such head thickness allows using a minimum amount of material, which means that head thickness is crucial for low CO2 footprint in terms of CO2 saving.

According to an embodiment, the head external surface comprises a head external surface height, which is between 40 and 60 percents of the head thickness. The ratio ensures rivet head stability for stress tests.

More generally such self-piercing rivets, with large undercut values can be used for a wide range of applications. Due to the high cross-sectional area of the rivet foot, even high-strength layers can be penetrated without the rivet collapsing. For soft or brittle materials, the large inner cutting edge in combination with a corresponding die allows the rivet to form a sufficient undercut.

Other characteristics and advantages of the embodiments of the present invention will readily appear from the following description of one of its embodiments, provided as non-limitative examples, and shown in the accompanying drawings.
Fig. 1 shows a longitudinal sectional view through an embodiment of a self-piercing rivet according to the invention;
Fig. 2 shows a view of detail II of Fig. 1;
Fig. 3 shows a sectioned view through a rivet free end according to the invention;
Fig. 4 shows a sectioned view through a rivet joint with a self-piercing rivet according to the invention.

On the different figures, the same reference signs designate identical or similar elements. All given measurements are understood, of course, with usual manufacturing tolerances.

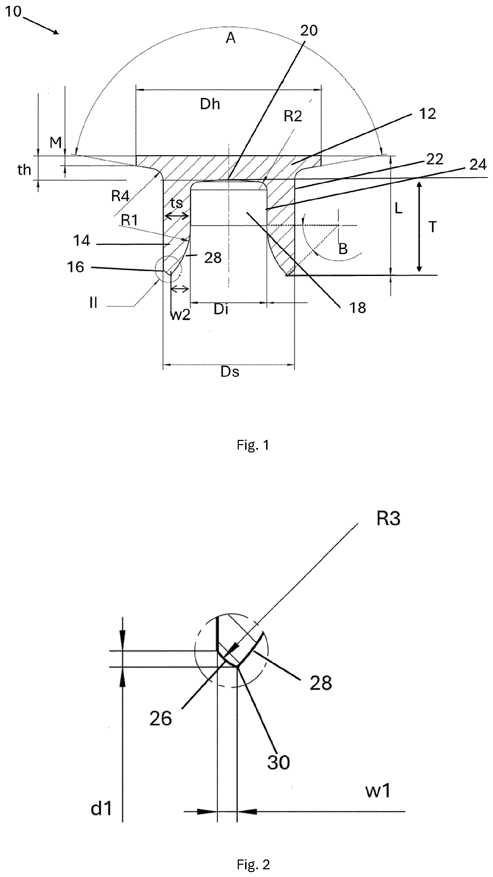

Fig. 1 shows a self-piercing rivet 10 comprising a rivet head 12, a rivet shank 14 extending along a longitudinal axis X and a rivet free end 16. The self-piercing rivet 10 is suitable for producing a joining connection between at least two components, such as components made of soft and/or high strength aluminium alloys.

The rivet shank 14 comprises a central shank bore 18 having a base 20. The rivet shank 14 further comprises a cylindrical shank outer surface 22 and a shank inner surface 24 limiting the central shank bore 18.

The shank outer surface has a first diameter Ds, also called outer diameter Ds. The first diameter may be of about 5.5 mm. The shank inner surface 20 has a second diameter Di, also called inner diameter Di. The second diameter Di may be of about 3.2 mm. The rivet shank 14 has a substantially constant radial thickness ts. Thus, in cross section, the rivet shank has a surface which is substantially constant along the longitudinal axis. The surface of the rivet shank 14 in cross-section is at least of 15 mm². This corresponds to the ring foot area. As mentioned above, for manufacturing reasons, the central bore may have a slightly reduced diameter at the end of the central shank bore, to allow better demolding of the rivet. For instance, the diameter of the central shank bore may be 0,05 mm smaller in the vicinity of the base.

As visible in Fig. 1, the base 20 is arc shaped. The base 20 can be provided with an arcuate transition of radius R2 between the periphery of the base and the shank inner surface. In other words, the base 20 merges into the shank inner surface 24 by means of the arcuate transition of radius R2. In other embodiments (not represented), the base could be conical, frustoconical or arc shaped. The radius R2 is for example of about 0.35 mm.

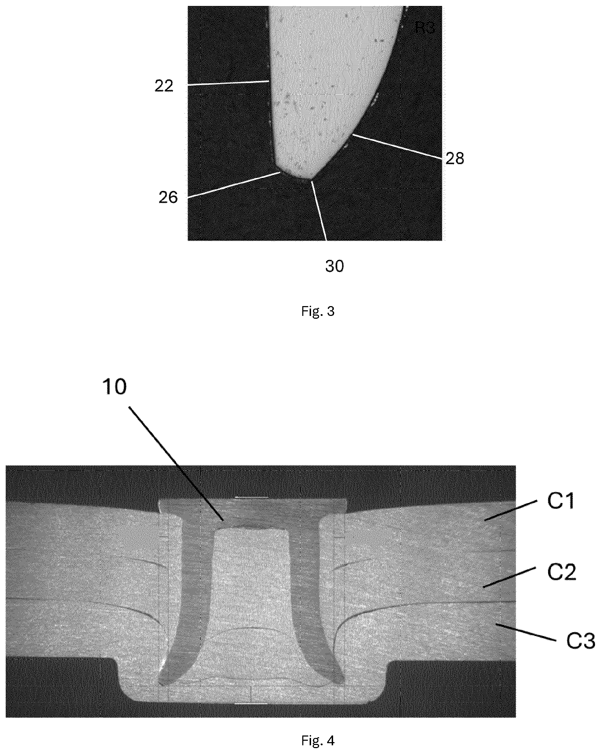

The rivet shank 14 extends between the rivet head 12 and the rivet free end 16. The rivet free end 16 comprises an outer portion 26 which is radiused with a radius of curvature R3. The rivet free end comprises a profile 28 which comprises a cutting radius R1. The outer portion 26 connects the shank 22 with the inner surface 24 by means of the profile 28. The outer portion 26 and the profile 28 forms a piercing tip 30. The piercing tip 30 is facing away from the rivet head 12. The piercing tip 30 is the pointed or sharp end of the self-piercing rivet 10 that is designed to first penetrate or pierce through the materials being joined. The rivet free end 16 is depicted in Fig. 2 or in Fig. 3.

The self-piercing rivet 10 defines a rivet length L from the piercing tip 30 up to the top surface of the rivet head 12 along the longitudinal axis which is for instance between 5 and 9 mm.

A distance d1 from the piercing tip to the cylindrical shank outer surface along the longitudinal axis is of about 0.25 mm. The distance d1 corresponds to the longitudinal height of the outer portion 26. The outer portion 26 may be radiused with the radius of curvature R3 which may for instance be between 0.3 and 0.6 mm. The width w1 of the outer portion 26 is for instance of at least 0.5 mm, and for instance of about 0.3mm. In another embodiment, the outer portion 26 is beveled. The width w2 of the profile 28 (corresponding to the radial thickness between the shank outer surface and the piercing tip) is of at least three times larger than the outer portion width. The width w2 of the profile 28 is at least 70%, more particularly at least 73% of the radial thickness ts.

The central shank bore 18 comprises a bore depth T between the base 20 of the central shank bore 18 and the piercing tip 30. More particularly the bore depth T is the greatest distance along the longitudinal axis X between the base 20 and the piercing tip 30. The bore depth is for instance between 4 and 8 mm.

The profile 28 comprises the cutting radius R1 and has a deflection angle B (also called angle of intersection and central angle) of at least 40 degrees. More particularly, the deflection angle is of at least 41 degrees. For instance the deflection angle may be between 40 and 45 degrees or between 42 and 45 degrees. The cutting radius R1 is for instance of about 3 mm.

The rivet head 12 comprises a flat head top surface and a cylindrical head external surface. The head top surface comprises a head external diameter Dh. The external diameter Dh may for instance be of about 7.75 mm. The head external surface comprises a head external surface height M. The head external surface may be between 0.4 mm and 0.5 mm. Inside the shank the head comprises a head bottom surface. The head bottom surface corresponds to the base 20 of the rivet shank. The rivet head 12 comprises a head thickness th which extends from the head top surface to the base 20. The head thickness th is for instance constant and of about 1mm.

The rivet head 12 comprises a transition region between the cylindrical head external surface and the rivet shank. The transition region may be such that the cylindrical shank outer surface 22 merges by means of an underhead radius and a head cone into the external circumference of the head. For example the head cone forms an angle A between 150 and 170 degrees. Such head cone angle reduces the setting forces. The underhead radius R4 may be of about 0.5 mm. In another embodiment, the cylindrical shank outer surface 22 merges by means of an underhead radius R4 only into the external circumference of the head (in other words into the cylindrical head external surface).

The joint section in Fig. 4 depicts a joint formed in a stack of three sheets C1, C2, C3 by the self-piercing rivet 10. The sheets C1, C2, C3 are made in aluminium or aluminium alloy. As shown, the mechanical interlock between the material is neat and clearly defined. No cracks occur.
self-piercing rivet 10
rivet head 12
rivet shank 14
rivet free end 16
central shank bore 18
base 20
shank outer surface 22
shank inner surface 24
first diameter Ds
second diameter Di
radial thickness ts
arcuate transition of radius R2
outer portion 26
profile 28
piercing tip 30
outer portion radius of curvature R3
rivet length L
outer portion distance d1
outer portion width w1
inner width w2
bore depth T
profile cutting radius R1
head external diameter Dh
head external surface height M
head thickness th
head cone angle A
deflection angle B
Components C1, C2, C3
underhead radius R4

## Claims

1. Self-piercing rivet (10) for producing a joining connection comprising:
a rivet head (12), a rivet free end (16) and a rivet shank (14) extending between the rivet head (12) and the rivet free end (16) along a longitudinal axis (X), the rivet shank (14) having a central shank bore (18) comprising a base (20),
the rivet shank (14) comprises a cylindrical shank outer surface (22) and a cylindrical shank inner surface (24) limiting the central shank bore,
the rivet free end comprises an outer portion (26) the outer portion (26) connecting the shank inner surface (24) by means of a profile (28) which comprises a cutting radius (R1), the outer portion forming, with the profile having the cutting radius R1, a piercing tip (30) facing away from the rivet head,
the shank outer surface (22) has a first diameter (Ds), the central shank bore (18) comprises a bore depth (T) between the base (20) of the central shank bore (18) and the piercing tip (30),
**characterized in that**
the rivet shank (14) has a substantial constant radial thickness (ts) and in cross-section a rivet shank surface which is at least 15 mm²,
and **in that** a deflection angle (B) of the profile (28) is at least 40 degrees.

2. Self-piercing rivet (10) according to claim 1, wherein a rivet length from the piercing tip up to the top surface along the longitudinal axis is between 5 and 9 mm.

3. Self-piercing rivet (10) according to claim 1 or 2, wherein the cutting radius (R1) is of about 3 millimeters.

4. Self-piercing rivet (10) according to any of claims 1 to 3, wherein the outer portion (26) comprises an outer portion width (w1) and an outer portion distance (d1), and wherein the outer portion width (w1) is at least 0.25 mm.

5. Self-piercing rivet (10) according to claim 4, wherein the profile (28) which comprises the cutting radius (R1) comprises an inner width (w2) which is at least three times larger than the outer portion width.

6. Self-piercing rivet (10) according to any of claims 1 to 4, wherein the profile (28) which comprises the cutting radius (R1) comprises an inner width (w2) which is at least 70% of the radial thickness (ts).

7. Self-piercing rivet (10) according to claim 1 to 6, wherein the outer portion (26) is curved or beveled.

8. Self-piercing rivet (10) according to any of claims 1 to 7, wherein the length of the rivet free end (16) along the longitudinal axis (X) from the piercing tip (30) to the cylindrical shank inner surface (24) is between 25% and 55% of the length of the central shank bore between the piercing tip and the base along the longitudinal axis.

9. Self-piercing rivet (10) according to any of claims 1 to 8, wherein the base (20) is flat or arc-shaped.

10. Self-piercing rivet (10) according to any of claims 1 to 9, wherein the cylindrical shank outer surface (22) merges by means of an underhead radius and a head cone into the external circumference of the head.

11. Self-piercing rivet (10) according to any of claims 1 to 10, wherein the cylindrical shank outer surface (22) merges by means of an underhead radius into the external circumference of the head.

12. Self-piercing rivet (10) according to any of claims 1 to 11, wherein the rivet head (12) comprises a head thickness (th) extending from the head top surface to the base, and wherein the head thickness is of about 1 mm.

13. Self-piercing rivet (10) according to any of claims 1 to 12, wherein the head external surface comprises a head external surface height (M), which is between 40 and 60 percents of the head thickness (th).

14. Self-piercing rivet (10) according to any of claims 1 to 12, wherein a distance (d1) from the piercing tip to the cylindrical shank outer surface along the longitudinal axis is of at least 0.25 mm.
